(19) Europäisches Patentamt / European Patent Office / Office européen des brevets

(11) EP 4 508 129 B1

(12) # EUROPEAN PATENT SPECIFICATION

(45) Date of publication and mention of the grant of the patent:
**22.04.2026 Bulletin 2026/17**

(21) Application number: **23738360.9**

(22) Date of filing: **02.06.2023**

(51) International Patent Classification (IPC):
***D21H 19/20*** *(2006.01)* ***C08L 23/16*** *(2006.01)*
***C08K 5/20*** *(2006.01)* ***D21H 19/22*** *(2006.01)*
***D21H 21/16*** *(2006.01)* ***C08L 23/0807*** *(2025.01)*
***D21H 27/10*** *(2006.01)*

(52) Cooperative Patent Classification (CPC):
(C-Sets available)
**C08K 5/20; C08L 23/0815; C08L 23/16; D21H 19/20; D21H 19/22; D21H 21/16; D21H 27/10**
(Cont.)

(86) International application number:
**PCT/US2023/067806**

(87) International publication number:
**WO 2023/240014 (14.12.2023 Gazette 2023/50)**

(54) **POLYOLEFIN DISPERSION WITH PRIMARY FATTY AMIDE ADDITIVE**
POLYOLEFINDISPERSION MIT EINEM PRIMÄREN FETTAMIDADDITIV
DISPERSION DE POLYOLEFINE AVEC UN ADDITIF D'AMIDE GRAS PRIMAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.06.2022 US 202263350547 P**

(43) Date of publication of application:
**19.02.2025 Bulletin 2025/08**

(73) Proprietor: **Dow Global Technologies LLC**
**Midland, MI 48674 (US)**

(72) Inventors:
- **YING, Hanze**
  **Midland, Michigan 48674 (US)**
- **MALOTKY, David, L.**
  **Midland, Michigan 48674 (US)**
- **DRUMRIGHT, Ray, E.**
  **Midland, Michigan 48674 (US)**
- **MASON, Jonathan, F.**
  **Midland, Michigan 48674 (US)**
- **QI, Luqing**
  **Midland, Michigan 48674 (US)**
- **KAINZ, Bernhard, U.**
  **77836 Rheinmuenster (DE)**

(74) Representative: **Beck Greener LLP**
**Fulwood House**
**12 Fulwood Place**
**London WC1V 6HR (GB)**

(56) References cited:
**WO-A1-2014/105380**
**WO-A1-2021/112165**
**JP-A- 2007 262 211**
**KR-B1- 102 006 945**
**US-A1- 2018 363 248**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 23/0869, C08K 5/20;**
**C08L 23/16, C08L 23/0869, C08K 5/20**

## Description

### Background of the Invention

The present invention relates to a composition comprising a polyolefin dispersion, a primary fatty amide additive, more particularly, a $C_5$-$C_{26}$-alkyl primary fatty amide. The composition has been found to be useful as a coating for a paper substrate.

Consumer demand for sustainable paper used in packaging is fueling interest in improving barrier properties and recyclability of coated paper. Barrier performance of paper is known to be enhanced with polyolefin coatings, which also provide heat-seal properties; still, attaining a coating areal density (coat weight) of < 10 g/m$^2$ by application of an extruded polyolefin layer onto a paper substrate has been elusive. Achieving these ultra-low coat weights is especially important in flexible packaging applications, where paper substrates have a paper areal density (basis weight) of < 60 g/m$^2$, and where the market requires > 85 wt% fiber recycling based on the mass of the article.

As disclosed in US 10,612,193 B2 (col. 2, Table 2) ultra-thin coatings can be prepared by applying a waterborne polyolefin emulsion onto the paper substrate, followed by curing; nevertheless, meeting targets for moisture vapor transmission rate (MVTR) and coefficient of friction (CoF) remain elusive. Accordingly, it would be an advance in the field of coated paper substrates to prepare a thin coating that meets the application requirements for MVTR and provides a recyclable package.

### Summary of the Invention

The present invention addresses a need in the art by providing a composition comprising an aqueous dispersion of a) poly-$C_2$-$C_3$-olefin particles; b) a dispersant which is a copolymer of ethylene and a carboxylic acid monomer or a salt thereof; and c) a $C_5$-$C_{26}$-alkyl primary fatty amide; wherein the concentration of the polyolefin particles is in the range of from 40 to 95 weight percent; the concentration of the dispersant is in the range of from 4 to 50 weight percent; and the concentration of the $C_5$-$C_{26}$-alkyl primary fatty amide is in the range of from 0.5 to 5 weight percent, wherein the concentrations are based on the weight of the poly-$C_2$-$C_3$-olefin particles, the dispersant, and the $C_5$-$C_{26}$-alkyl primary fatty amide. The composition of the present invention can be used to provide ultra-thin coatings on a paper substrate with advantageous moisture vapor transmission rate and coefficient of friction properties.

### Detailed Description of the Invention

The present invention is a composition comprising an aqueous dispersion of a) poly-$C_2$-$C_3$-olefin particles; b) a dispersant which is a copolymer of ethylene and a carboxylic acid monomer or a salt thereof; and c) a $C_5$-$C_{26}$-alkyl primary fatty amide; wherein the concentration of the polyolefin particles is in the range of from 40 to 95 weight percent; the concentration of the dispersant is in the range of from 4 to 50 weight percent; and the concentration of the $C_5$-$C_{26}$-alkyl primary fatty amide is in the range of from 0.5 to 5 weight percent, wherein the concentrations are based on the weight of the poly-$C_2$-$C_3$-olefin particles, the dispersant, and the $C_5$-$C_{26}$-alkyl primary fatty amide.

As used herein, "poly-$C_2$-$C_3$-olefin particles" refer to polyethylene particles, polypropylene particles, and poly(ethylene-propylene) copolymers particles. The polyethylene may be an ethylene-$C_4$-$C_{10}$-$\alpha$-olefin copolymer (i.e., linear low-density polyethylene) such as an ethylene-1-butene copolymer, an ethylene-1-hexene copolymer, and an ethylene-1-octene copolymer. A commercially available linear low-density polyethylene is AFFINITY PL1280 LLDPE Ethylene-Octene Copolymer (A Trademark of The Dow Chemical Company or its Affiliates). The polyethylene may also be a high-density polyethylene, commercially available, for example, as DOW™ DMDA-8940 NT 7 HDPE Resin; or a low-density polyethylene. An example of a commercially available ethylene-propylene copolymer is VERSIFY™ 4200 Propylene-Ethylene Copolymer (Trademarks of The Dow Chemical Company or its Affiliates), and a commercially available polypropylene is Braskem 6D43 Random Copolymer. The particles, which are believed to contain the $C_2$-$C_3$-polyolefin and some amount of the dispersant and the primary fatty amide associated therewith, preferably have a volume mean particle size in the range of from 200 nm or from 300 nm to 5 $\mu$m or to 3 $\mu$m or to 1.5 $\mu$m, as measured by dynamic light scattering.

The dispersant is a copolymer of ethylene and a carboxylic acid monomer or a salt thereof. Examples of suitable dispersants include ethylene-acrylic acid copolymers, ethylene-methacrylic acid copolymers, and ethylene-itaconic acid copolymers, and lithium, sodium, and potassium salts thereof.

The weight-to-weight ratio of structural units of ethylene to carboxylic acid monomer is preferably in the range of from 95:5, more preferably from 90:10, and most preferably from 85:15; to 70:30, more preferably to 75:25. As used herein, the term "structural unit" of the named monomer refers to the remnant of the monomer after polymerization. For example, a structural unit of methacrylic acid is as illustrated:

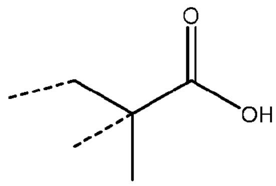

structural unit of methacrylic acid

where the dotted lines represent the points of attachment of the structural unit to the polymer backbone.

Examples of commercially available dispersants include PRIMACOR™ 5980i Ethylene-Acrylic Acid Copolymer and NUCREL 960™ Ethylene-Methacrylic Acid Copolymer (Trademarks of The Dow Chemical Company or its Affiliates).

The $C_5$-$C_{26}$-alkyl primary fatty amide may be linear or branched and may be saturated or partially unsaturated with one or two or three double bonds. The fatty amide may also be a $C_{10-}$-$C_{24}$-alkyl primary fatty amide or a $C_{16}$-$C_{22}$-alkyl primary fatty amide. Examples of suitable fatty amides include linear and branched $C_{18-}$-alkyl mono-unsaturated fatty amides; linear and branched $C_{18}$-alkyl saturated fatty amides; linear and branched $C_{22}$-alkyl mono-unsaturated fatty amides; and linear and branched $C_{22}$-alkyl saturated fatty amides. The $C_5$-$C_{26}$-alkyl primary fatty amide preferably has a melting point in the range of from 50 °C or from 65 °C to 115 °C or to 100 °C or to 90 °C.

The concentration of the poly-$C_2$-$C_3$-olefin particles less any associated dispersant or primary fatty amide is in the range of from 40 or from 60 or from 70 weight percent, to 95 or to 90 weight percent, based on the weight of the polyolefin, the dispersant, and the $C_5$-$C_{26}$-alkyl primary fatty amide. The concentration of the dispersant is in the range of from 4 or from 9, or from 15 weight percent, to 50, or to 40, or to 30 weight percent, based on the weight of the polyolefin particles, the dispersant, and the $C_5$-$C_{26-}$-alkyl fatty amide. The concentration of the $C_5$-$C_{26}$-alkyl primary fatty amide is in the range of from 0.5 or from 1 to 5 or to 4 or to 3 weight percent, based on the weight of the polyolefin particles, the dispersant, and the $C_5$-$C_{26}$-alkyl fatty amide.

A neutralizing agent such as KOH is advantageously used to adjust the pH of the composition to the desired level, which is preferably in the range of from 8 to 11.

The composition advantageously further comprises a stabilizing amount of an anionic surfactant such as a $C_{10}$-$C_{24}$ linear or branched alkyl or aralkyl carboxylate, sulfate, or phosphate; or a nonionic surfactant such as a secondary alcohol ethoxylate or an ethylene oxide propylene oxide block copolymer surfactant. The composition can be prepared as shown in the Examples section.

It has been discovered that coat weights in the range of 1 g/m$^2$, or from 2 g/m$^2$ or from 5 g/m$^2$ to 20 g/m$^2$ or to 12 g/m$^2$ or to 10 g/m$^2$ can be achieved with desirable moisture vapor transmission rate (MVTR) and coefficient of friction (CoF) properties.

Method for Preparing Coated Substrates and Measuring Coat Weights

UPM Brilliant 62 Glassine Paper (basis wt. 62 g/m$^2$) was coated with the polyolefin dispersion using a drawdown bar and dried in a forced air oven for 2 min at 100° C to a final coating areal density (coat weight) of 8 g/m$^2$ (~ 8 to 9 $\mu$m coating thickness). Coat weights were measured by punching holes in coated and uncoated UPM paper with a circular die to form discs having a specified diameter (D cm). The coated discs (W1) were weighed against the uncoated disc (W2) and the coat weights were calculated by the formula:

$$\frac{(W1 - W2)}{\pi \text{ x } (\frac{D}{200})^2}$$

Moisture Vapor Transmission Rate Measurements

Moisture Vapor Transmission Rates (MVTRs) were determined in accordance with ASTM E96/E96M. A coated paper sample was sealed to the open end of a permeability cup followed by exposure of the sample to a controlled temperature and humidity environment (typically, a humidity chamber). MVTR was determined based by measuring mass uptake for the cup as a function of time.

Dynamic Coefficient of Friction Measurements

The dynamic coefficients of friction (CoFs) were measured using a Texture Analyzer with a sliding friction rig in

accordance with TAPPI T549. A piece of coated paper was affixed to the bottom of a sled weighing 200 g with the coated side facing down. Another piece of coated paper was affixed to a plane with coated side facing up. A string was attached to the sled and pulled so that the sled traversed the plane at the speed of 2.5 mm/s for at least 100 mm. The plateaued force Fd (unit: gram force) for the constant moving of the sled was recorded. Dynamic CoFs were calculated as Fd/200.

Calculation of Degree of Neutralization

The degree of neutralization of the polyolefin dispersions was determined by the following equation:

$$DoN = \frac{56000 \text{ x } W}{E_B \sum_i A_i \omega_i} \times 100$$

where W is the weight of the base added in g, $E_B$ is the equivalent weight of the base, $A_i$ is the acid number of the ith component in units of mg KOH/g and the $\omega_i$ is the weight fraction of the ith component in POD dispersion solid.

Examples

Table 1 illustrates the components and feed rates used to prepare Examples 1-4 and Comparative Examples 1-5. Feed rates are shown parenthetically. The general procedure is shown following Table 1. PO refers to the polyolefin; Amide refers to the fatty amide; $H_2O_o$ refers to the initial water rate; $H_2O_d$ refers to the dilution water rate; Solids refers to the wt.% solids of the polyolefin the dispersant, the fatty amide, and the anionic surfactant in the dispersion; and PS refers to the particle size of the particles in microns as determined by dynamic light scattering.

PL1280 refers to AFFINITY™ PL 1280 LLDPE EthyleneOctene Copolymer; V4200 refers to VERSIFY™ Ethylene-Propylene Copolymer; N960 refers to NUCREL™ N960 Ethylene-Methacrylic Acid Copolymer. OA (Oleamide, m.p. 70 °C) is a $C_{18}$-alkyl mono-unsaturated primary fatty amide; EA (Euracamide, m.p 80 °C) is a $C_{22}$-alkyl mono-unsaturated primary fatty amide; BA (behenamide, m.p. 112 C°) is a $C_{22}$-alkyl saturated primary fatty amide; EBS (ethylene bis-stearamide, m.p. 145° C) is a $C_{38}$-alkyl secondary fatty amide; OPA (oleyl palmitamide, m.p. 60-66 °C) is a $C_{34}$-alkyl secondary fatty amide; SEA (stearyl euracamide, m.p. 70-75 °C) is a $C_{40}$-alkyl secondary fatty amide.

The degree of neutralization for Comparative Examples 1-4 and Examples 1-6 was 75% and the degree of neutralization for Comparative Example 5 and Example 7 was 80%.

Table 1 - Components and Feed Rates for Examples

| Ex. No. | PO (g/min) | N960 (g/min) | Amide (g/min) | $H_2O_o$ (mL/min) | KOH (mL/min) | $H_2O_d$ (mL/min) | Solids (wt.%) | PS (μm) |
|---|---|---|---|---|---|---|---|---|
| Comp. 1 | PL1280 (61.3) | (11.4) | None | (7.9) | (3.3) | (80) | 47.8 | 0.41 |
| Ex. 1 | PL1280 (60.2) | (11.4) | OA (1.1) | (7.9) | (3.3) | (80) | 48.2 | 0.56 |
| Ex. 2 | PL1280 (59) | (11.4) | OA (2.3) | (7.9) | (3.3) | (80) | 49.2 | 0.86 |
| Ex. 3 | PL1280 (60.2) | (11.4) | EA (1.1) | (7.9) | (3.3) | (80) | 48.4 | 0.57 |
| Ex. 4 | PL1280 (59) | (11.4) | EA (2.3) | (7.9) | (3.3) | (80) | 48.8 | 1.44 |
| Ex. 5 | PL1280 (60.2) | (11.4) | BA (1.1) | (7.9) | (3.3) | (80) | 48.4 | 0.55 |
| Ex. 6 | PL1280 (59) | (11.4) | BA (2.3) | (7.9) | (3.3) | (80) | 48.3 | 1.21 |
| Comp. 2 | PL1280 (60.2) | (11.4) | EBS (1.1) | (7.9) | (3.3) | (80) | 48.0 | 0.56 |
| Comp. 3 | PL1280 (60.1) | (11.3) | OPA (1.1) | (7.9) | (3.3) | (79) | 49.1 | 0.45 |
| Comp 4 | PL1280 (59.0) | (11.3) | SEA (1.1) | (7.9) | (3.3) | (77) | 49.5 | 0.41 |
| Ex. 7 | V4200 (59.8) | (11.4) | EA (1.5) | (9.2) | (3.1) | (80) | 49.1 | 1.32 |
| Comp. 5 | V4200 (61.3) | (11.4) | None | (7.9) | (3.5) | (85) | 47.7 | 0.52 |

General Procedure for Preparation of Aqueous Dispersions of Polyolefin Dispersions Aqueous dispersions were prepared by the following general procedure:

The PO, N960, and the Amide (except for Comparative Examples 1 and 5) were fed into a 25-mm diameter twin screw extruder using separate controlled rate feeders. The anionic surfactant (Oleic acid) was pumped into the melt zone of the

extruder as a liquid using an Isco syringe pump at a feed rate of 3.4 mL/min. The PO, N960, and the Amide were forwarded through the extruder and melted to form an intermediate liquid melt material.

The extruder temperature profile was ramped up to 150 °C. Water and 30% aq. KOH were mixed and fed to the extruder at an initial water introduction site after a uniform polymer melt was formed; then, dilution water was fed into the extruder. The extruder speed was 450 rpm for all samples except Comparative Example 5, where the extruder speed was 400 rpm. At the extruder outlet, a backpressure regulator was used to adjust the pressure inside the extruder barrel to a pressure adapted to reduce steam formation, generally in the range of 2 MPa to 4 MPa.

Each aqueous dispersion exited from the extruder and was filtered first through a 200-μm filter. The solids content of dispersions was measured using an infrared solids analyzer, and the volume mean particle size of the polymer particles was measured using a COULTER™ LS-230 particle size analyzer (Beckman Coulter Corporation, Fullerton, CA).

Table 2 illustrates the MVTR and CoF for the examples and comparative examples. The coating thicknesses for each sample was 8 gsm. PO:N960:Amide refers to the w/w/w ratios of the polyolefin, the dispersant, and the fatty amide.

Table 2 - MVTR and CoF of Samples

| Ex No. | PO:N960:Amide | Amide m.p. °C | 1° or 2° | MVTR | CoF dynamic |
|---|---|---|---|---|---|
| Comp. 1 | 84.4:15.6:0 | none | NA | 185.3 | 0.29 |
| Ex. 1 | 82.8:15.6: 1.6 | 70 | 1° | 124 | 0.07 |
| Ex. 2 | 81.2:15.6:3.2 | 70 | 1° | 92 | 0.07 |
| Ex. 3 | 82.8:15.6:1.6 | 80 | 1° | 146.3 | 0.09 |
| Ex. 4 | 81.2:15.6:3.2 | 80 | 1° | 88.6 | 0.10 |
| Ex. 5 | 82.8:15.6:1.6 | 112 | 1° | 125 | 0.29 |
| Ex. 6 | 81.2:15.6:3.2 | 112 | 1° | 89.1 | 0.3 |
| Comp. 2 | 82.8:15.6:1.6 | 145 | 2° | 193 | 0.36 |
| Comp. 3 | 82.8:15.6:1.6 | 60-66 | 2° | 191.9 | 0.11 |
| Comp. 4 | 82.8:15.6:1.6 | 70-75 | 2° | 195.9 | 0.15 |
| Ex. 7 | 82.8:15.6:1.6 | 80 | 1° | 103 | 0.06 |
| Comp. 5 | 84.4:15.6:0 | none | NA | 143 | 1.35 |

The data show an improvement in MVTR for coatings containing primary fatty amides when compared with coatings containing either no amide additive or coatings containing secondary fatty amides. For certain applications, dynamic CoFs of 0.3 or less are acceptable; for other applications, CoFs of less than 0.2 are required.

## Claims

1. A composition comprising an aqueous dispersion of a) poly-$C_2$-$C_3$-olefin particles; b) a dispersant which is a copolymer of ethylene and a carboxylic acid monomer or a salt thereof; and c) a $C_5$-$C_{26}$-alkyl primary fatty amide; wherein the concentration of the polyolefin particles is in the range of from 40 to 95 weight percent; the concentration of the dispersant is in the range of from 4 to 50 weight percent; and the concentration of the $C_5$-$C_{26}$-alkyl primary fatty amide is in the range of from 0.5 to 5 weight percent, wherein the concentrations are based on the weight of the poly-$C_2$-$C_3$-olefin particles, the dispersant, and the $C_5$-$C_{26}$-alkyl primary fatty amide.

2. The composition of Claim 1 wherein the dispersant is an ethylene-acrylic acid copolymer or a salt thereof or an ethylene-methacrylic acid copolymer or a salt thereof; and the $C_5$-$C_{26}$-alkyl primary fatty amide is a $C_{10}$-$C_{24}$-alkyl primary fatty amide.

3. The composition of Claim 2 wherein the $C_{10}$-$C_{24}$-alkyl primary fatty amide is a $C_{16}$-$C_{22}$-alkyl primary fatty amide having a melting point in the range of from 50 °C to 115 °C, and the poly-$C_2$-$C_3$-olefin particles are ethylene-$C_4$-$C_{10}$-α-olefin copolymer particles.

4. The composition of Claim 3 wherein the ethylene-$C_4$-$C_{10}$-α-olefin copolymer particles are ethylene-1-octene copolymer particles.

5. The composition of Claim 2 wherein the $C_{10}$-$C_{24}$-alkyl primary fatty amide is a $C_{16}$-$C_{22}$-alkyl primary fatty amide having a melting point in the range of from 50 °C to 115 °C, and the poly-$C_2$ -$C_3$-olefin particles are polypropylene particles.

6. The composition of Claim 2 wherein the $C_{10}$-$C_{24}$-alkyl primary fatty amide is a $C_{16}$-$C_{22}$-alkyl primary fatty amide having a melting point in the range of from 50 °C to 115 °C, and the poly-$C_2$ -$C_3$-olefin particles are poly(ethylene-propylene) copolymers particles.

7. The composition of Claim 2 wherein, based on the weight of the poly-$C_2$-$C_3$-olefin particles, the dispersant, and the $C_{10}$-$C_{24}$-alkyl primary fatty amide, the concentration of the poly-$C_2$-$C_3$-olefin is in the range of from 60 to 90 weight percent; the concentration of the dispersant is in the range of from 9 to 40 weight percent; and the concentration of the $C_{10}$-$C_{24}$-alkyl primary fatty amide is in the range of from 1 to 4 weight percent.

8. The composition of any of Claims 3 to 6 wherein, based on the weight of the poly-$C_2$-$C_3$-olefin particles, the dispersant, and the $C_{16}$-$C_{22}$-alkyl primary fatty amide, the concentration of the poly-$C_2$-$C_3$-olefin is in the range of from 60 to 90 weight percent; the concentration of the dispersant is in the range of from 9 to 40 weight percent; and the concentration of the $C_{16}$-$C_{22}$-alkyl primary fatty amide is in the range of from 1 to 4 weight percent.

## Patentansprüche

1. Zusammensetzung, umfassend eine wässrige Dispersion von a) Poly-$C_2$-$C_3$-Olefinpartikeln; b) einem Dispergiermittel, das ein Copolymer von Ethylen und einem Carbonsäuremonomer oder ein Salz davon ist; und c) einem primären $C_5$-$C_{26}$-Alkylfettsäureamid; wobei die Konzentration der Polyolefinpartikel im Bereich von 40 bis 95 Gewichtsprozent liegt; die Konzentration des Dispergiermittels im Bereich von 4 bis 50 Gewichtsprozent liegt; und die Konzentration des primären $C_5$-$C_{26}$-Alkylfettsäureamids im Bereich von 0,5 bis 5 Gewichtsprozent liegt, wobei die Konzentrationen auf dem Gewicht der Poly-$C_2$-$C_3$-Olefinpartikel, des Dispergiermittels und des primären $C_5$-$C_{26}$-Alkylfettsäureamids basieren.

2. Zusammensetzung nach Anspruch 1, wobei das Dispergiermittel ein Ethylen-Acrylsäure-Copolymer oder ein Salz davon oder ein Ethylen-Methacrylsäure-Copolymer oder ein Salz davon ist; und das primäre $C_5$-$C_{26}$-Alkylfettsäureamid ein primäres $C_{10}$-$C_{24}$-Alkylfettsäureamid ist.

3. Zusammensetzung nach Anspruch 2, wobei das primäre $C_{10}$-$C_{24}$-Alkylfettsäureamid ein primäres $C_{16}$-$C_{22}$-Alkylfettsäureamid ist, das einen Schmelzpunkt im Bereich von 50 °C bis 115 °C aufweist, und die Poly-$C_2$-$C_3$-Olefinpartikel Ethylen-$C_4$-$C_{10}$-$\alpha$-Olefin-Copolymerpartikel sind.

4. Zusammensetzung nach Anspruch 3, wobei die Ethylen-$C_4$-$C_{10}$-$\alpha$-Olefin-Copolymerpartikel Ethylen-1-Octen-Copolymerpartikel sind.

5. Zusammensetzung nach Anspruch 2, wobei das primäre $C_{10}$-$C_{24}$-Alkylfettsäureamid ein primäres $C_{16}$-$C_{22}$-Alkylfettsäureamid ist, das einen Schmelzpunkt im Bereich von 50 °C bis 115 °C aufweist, und die Poly-$C_2$-$C_3$-Olefinpartikel Polypropylenpartikel sind.

6. Zusammensetzung nach Anspruch 2, wobei das primäre $C_{10}$-$C_{24}$-Alkylfettsäureamid ein primäres $C_{16}$-$C_{22}$-Alkylfettsäureamid ist, das einen Schmelzpunkt im Bereich von 50 °C bis 115 °C aufweist, und die Poly-$C_2$-$C_3$-Olefinpartikel Poly(ethylen-propylen)-Copolymerpartikel sind.

7. Zusammensetzung von Anspruch 2, wobei, basierend auf dem Gewicht der Poly-$C_2$-$C_3$-Olefinpartikel, des Dispergiermittels und des primären $C_{10}$-$C_{24}$-Alkylfettsäureamids, die Konzentration des Poly-$C_2$-$C_3$-olefins im Bereich von 60 bis 90 Gewichtsprozent liegt; wobei die Konzentration des Dispergiermittels im Bereich von 9 bis 40 Gewichtsprozent liegt; und die Konzentration des primären $C_{10}$-$C_{24}$-Alkylfettsäureamids im Bereich von 1 bis 4 Gewichtsprozent liegt.

8. Zusammensetzung nach einem der Ansprüche 3 bis 6, wobei, basierend auf dem Gewicht der Poly-$C_2$-$C_3$-Olefinpartikel, des Dispergiermittels und des primären $C_{16}$-$C_{22}$-Alkylfettsäureamids, die Konzentration des Poly-$C_2$-$C_3$-olefins im Bereich von 60 bis 90 Gewichtsprozent liegt; wobei die Konzentration des Dispergiermittels im Bereich von 9 bis 40 Gewichtsprozent liegt; und die Konzentration des primären $C_{16}$-$C_{22}$-Alkylfettsäureamids im Bereich von 1 bis 4 Gewichtsprozent liegt.

## Revendications

1. Composition comprenant une dispersion aqueuse de a) particules de poly-oléfine en $C_2$-$C_3$ ; b) un dispersant qui est un copolymère d'éthylène et d'un monomère d'acide carboxylique ou un sel de ceux-ci ; et c) un amide gras primaire d'alkyle en $C_5$-$C_{26}$ ; dans laquelle la concentration des particules de polyoléfine est comprise dans la plage allant de 40 à 95 pour cent en poids ; la concentration du dispersant est comprise dans la plage allant de 4 à 50 pour cent en poids ; et la concentration de l'amide gras primaire d'alkyle en $C_5$-$C_{26}$ est comprise dans la plage allant de 0,5 à 5 pour cent en poids, dans laquelle les concentrations sont basées sur le poids des particules de poly-oléfine en $C_2$-$C_3$, du dispersant, et de l'amide gras primaire d'alkyle en $C_5$-$C_{26}$.

2. Composition selon la revendication 1, dans laquelle le dispersant est un copolymère d'éthylène-acide acrylique ou un sel de celui-ci ou un copolymère d'éthylène-acide méthacrylique ou un sel de celui-ci ; et l'amide gras primaire d'alkyle en $C_5$-$C_{26}$ est un amide gras primaire d'alkyle en $C_{10}$-$C_{24}$.

3. Composition selon la revendication 2, dans laquelle l'amide gras primaire d'alkyle en $C_{10}$-$C_{24}$ est un amide gras primaire d'alkyle en $C_{16}$-$C_{22}$ ayant un point de fusion compris dans la plage allant de 50 °C à 115 °C, et les particules de poly-oléfine en $C_2$-$C_3$ sont des particules de copolymère d'éthylène-$\alpha$-oléfine en $C_4$-$C_{10}$.

4. Composition selon la revendication 3, dans laquelle les particules de copolymère d'éthylène-$\alpha$-oléfine en $C_4$-$C_{10}$ sont des particules de copolymère d'éthylène-1-octène.

5. Composition selon la revendication 2, dans laquelle l'amide gras primaire d'alkyle en $C_{10}$-$C_{24}$ est un amide gras primaire d'alkyle en $C_{16}$-$C_{22}$ ayant un point de fusion compris dans la plage allant de 50 °C à 115 °C, et les particules de poly-oléfine en $C_2$-$C_3$ sont des particules de polypropylène.

6. Composition selon la revendication 2, dans laquelle l'amide gras primaire d'alkyle en $C_{10}$-$C_{24}$ est un amide gras primaire d'alkyle en $C_{16}$-$C_{22}$ ayant un point de fusion compris dans la plage allant de 50 °C à 115 °C, et les particules de poly-oléfine en $C_2$-$C_3$ sont des particules de copolymères de poly(éthylène-propylène).

7. Composition selon la revendication 2, dans laquelle, sur la base du poids des particules de poly-oléfine en $C_2$-$C_3$, du dispersant, et de l'amide gras primaire d'alkyle en $C_{10}$-$C_{24}$, la concentration de la poly-oléfine en $C_2$-$C_3$ est comprise dans la plage allant de 60 à 90 pour cent en poids ; la concentration du dispersant est comprise dans la plage allant de 9 à 40 pour cent en poids ; et la concentration de l'amide gras primaire d'alkyle en $C_{10}$-$C_{24}$ est comprise dans la plage allant de 1 à 4 pour cent en poids.

8. Composition selon l'une quelconque des revendications 3 à 6, dans laquelle, sur la base du poids des particules de poly-oléfine en $C_2$-$C_3$, du dispersant, et de l'amide gras primaire d'alkyle en $C_{16}$-$C_{22}$, la concentration de la poly-oléfine en $C_2$-$C_3$ est comprise dans la plage allant de 60 à 90 pour cent en poids ; la concentration du dispersant est comprise dans la plage allant de 9 à 40 pour cent en poids ; et la concentration de l'amide gras primaire d'alkyle en $C_{16}$-$C_{22}$ est comprise dans la plage allant de 1 à 4 pour cent en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10612193 B2